# EUROPEAN PATENT APPLICATION

(11) **EP 2 423 866 A1**
(43) Date of publication of application: **29.02.2012**
(21) Application number: 10008973.9
(22) Date of filing: 30.08.2010
(51) Int. Cl.: G06Q 30/00

(54) **Method and devices for targeted distribution of data**

(71) Applicant: ETH Zurich, 8092 Zürich (CH)
(72) Inventor: Palme, Elia, 6913 Carabbia (CH); Gasimov, Anar, 1009 Pully (CH); Sutanto, Juliana, 8047 Zürich (CH); Magagna, Fabio, 6460 Altdorf (CH)

(57) **Abstract**

A network server (2) distributes data objects comprising user data and match estimator instructions via a telecommunication network (3) to a plurality of communication terminals (4, 4') for rendering the user data at the communication terminals (4, 4'). Based on locally stored user profile data, the communication terminals (4, 4') compute an affinity value according to the match estimator instructions. Depending on the computed affinity value, the communication terminals (4, 4') select in each case the user data to be rendered. Thus, the invention makes possible targeted distribution of user data whereby the distribution/selection strategy is controlled centrally by the network server (2). At the same time, privacy of the users is guaranteed since, from outside of the communication terminal (4, 4'), it is neither possible to access the local user profile data, nor is it possible to track which user data is actually selected and rendered.

## Description

### Field of the Invention

The present invention relates to the targeted distribution of data via telecommunication networks. Specifically, the present invention relates to a method and devices for distributing data to a plurality of communication terminals for rendering selectively the data at the communication terminals.

### Background of the Invention

The continuing expansion of the Internet has led to the widespread practice of electronic distribution of data such as e.g. multimedia files, digital advertisement, or software in general. The publish/subscribe model is one method of distributing data over the Internet. In this model, a user may decide to subscribe to a certain service based on his preferences. Whenever new content, e.g. news, stock market data or other information, is available, the service will send the new content to the user. For many application scenarios such as mailing groups and newsletters, it has turned out that this kind of targeted distribution of data is more effective than simply broadcasting the data to all users.

Another example of targeted distribution of data is targeted advertisement. The goal of targeted advertising is to present captivating advertisement only to those customers which are in the marketing target of a certain product. Only if the user is potentially interested in the product according to his user profile, the advertisement is presented to the user.

However, in many scenarios targeted information dissemination relies on local and personal user information. In those scenarios, users are concerned about their personal data, and privacy becomes an important issue that needs to be taken into account. The most common solution to protect the privacy of a user communicating with e.g. a network server is to use a third trusted party component. A third trusted party component is an actor which is supposed to be secure and trusted and helps to establish a secure data transfer between the user and the network server.

US2005/0038698A1 describes a computer which receives an advertisement together with a target profile via a communication network. The computer logs user activities, e.g. visited web sites of a user and stores the logged user activities in a local user profile. Moreover, the local user profile may comprise user-specified criteria pertaining to which advertisements are to be shown on the computer. If user activities specified in the target profile are contained in the user profile of the computer, the computer may display an advertisement on a monitor. The user of the computer is provided with an editing interface to make changes to the user profile by deleting and/or adding information to the user profile.

US2008/0004954A1 describes a method that facilitates advertising on a computer system. For this purpose, the operating system of the computer and client applications, such as computer games or word processors, are used to present the advertisement. The computer system receives advertisement content from an advertisement server. A local analysis on the computer system considers e.g. personal content and activities of the user of the computer system. The latter information is used by local learning, reasoning and matching methods to select which advertisement content is inserted into the client application for presentation and where the advertisement content is displayed in the client application. Hence, the computer system controls autonomously which and how the received advertisement is presented.

US2006/0265283A1 describes a computer system including a web browser toolbar that collects information on the preferences of a user based on the user's online activities. The web browser toolbar includes a user interface configured to receive a query from a user and to transmit the received query to a web search engine. Based on e.g. the input search terms, the web search engine analyzes the preferences of the user and determines advertisement targeted at the preferences of the user. The determined advertisement is then displayed in a browser. When the user uses a displayed link in the advertisement to access an advertiser's website and generates revenue for the advertiser, the advertiser initiates a payment to the operator of the web search engine.

Thus, in systems for targeted distribution of data known from state of the art, the selection of data is controlled locally by the communication terminals or performed externally by a third party. In the latter case, privacy strongly depends on the reliability and trustworthiness of the third party.

### Summary of the Invention

It is an object of this invention to provide a method and devices for distributing data to a plurality of communication terminals for selective rendering of the data by the communication terminals.

According to the present invention, these objects are achieved through the features of the independent claims. In addition, further advantageous embodiments follow from the dependent claims and the description.

According to the present invention, the above mentioned objects are particularly achieved in that for distributing data from a network server to a plurality of communication terminals for rendering the data at the communication terminals, the communication terminals in each case receive from the network server via a telecommunication network a data object comprising user data and match estimator instructions. At the communication terminals, the user data and the match estimator instructions are extracted from the data object, and an affinity value is computed according to the match estimator instructions based on user profile data stored at the communication terminal. Specifically, the affinity value is computed by interpreting or executing the match estimator instructions. Depending on the computed affinity value, the communication terminals select in each case user data to be rendered by the communication terminal. Thus, the invention makes possible targeted distribution of user data from a central network server to communication terminals whereby the distribution/selection strategy is controlled centrally by the network server. At the same time, privacy of the users is guaranteed since, from outside of the communication terminal, it is neither possible to access the local user profile data, nor is it possible to track which user data is actually selected and rendered. Due to the distributed computation of affinity values, only a comparatively simple infrastructure of the network server is required and the number of communication terminals is highly scalable.

In an embodiment, the communication terminal executes or interprets the match estimator instructions for computing the affinity value by combining and weighting values of the user profile data. Thus, it is possible to design sophisticated selection strategies at the central network server for automated, distributed selection of user data at the communication terminals.

In a preferred embodiment, the communication terminal determines from the data object the user profile data required for computing the affinity value. Hence, an automated mechanism is provided for generating the user profile data at the communication terminals as needed for computing the affinity values for specific user data.

In another embodiment, the communication terminal requests the user of the communication terminal via a user interface to enter the user profile data required by the match estimator instructions for computing the affinity value. Thus, it is possible to dynamically update and extend the user profile stored at the communication terminal as needed for computing the affinity values for specific user data.

In yet another embodiment, the communication terminal stores the data objects received from the network server in a data object repository, stores the affinity value assigned to the respective data object in the data object repository, continuously monitors the data object repository and selects, depending on the affinity values assigned to the data objects, the user data to be rendered by the communication terminal. Thus, it is possible to dynamically evaluate new data objects and new user profile data in order to select user data for rendering.

In another embodiment the communication terminal executes the match estimator instructions for computing a certitude value which indicates reliability of the computed affinity value, and selects, depending on the affinity value and the certitude value, the user data to be rendered by the communication terminal. Thus, a more differentiated and flexible selection of user data becomes possible and the handling of missing user profile data is facilitated by computing the certitude value depending on the user profile data required for computing the affinity value and available at the communication terminal.

In addition to a method of distributing user data to a plurality of communication terminals for rendering selectively the user data at the communication terminals, the present invention also relates to a network server which is configured to generate data objects comprising user data and match estimator instructions, whereby the match estimator instructions are configured to instruct a communication terminal to compute affinity values based on user profile data locally stored at the communication terminal. The network server is further configured to transmit the data object via a telecommunication network to the communication terminal for enabling the communication terminal to select user data to be rendered depending on the computed affinity value.

In addition to a method and network server for distributing user data to a plurality of communication terminals for rendering selectively the user data at the communication terminals, the present invention also relates to a computer program product comprising computer program code; particularly, a computer program product comprising a tangible computer-readable medium having the computer program code stored thereon. The computer program code directs one or more processors of a communication terminal, such that the communication terminal receives via telecommunication network from a network server a data object comprising user data and match estimator instructions, and extracts the user data and the match estimator instructions from the data object. Moreover, the computer program code directs the one or more processors of the communication terminal, such that the communication terminal computes an affinity value according to the match estimator instructions based on user profile data stored at the communication terminal, selects the user data to be rendered by the communication terminal depending on the computed affinity value, and renders the selected user data.

### Brief Description of the Drawings

The present invention will be explained in more detail, by way of example, with reference to the drawings in which:
Figure 1 shows a block diagram illustrating schematically a system for transmitting user data from a network server to a communication terminal for selective rendering of the user data by the communication terminal based on local user profile data.
Figures 2 to 4 show flow diagrams illustrating examples of sequences of steps performed by a communication terminal for receiving user data from a network server and for selective rendering of the user data based on local user profile data.

### Detailed Description of the Preferred Embodiments

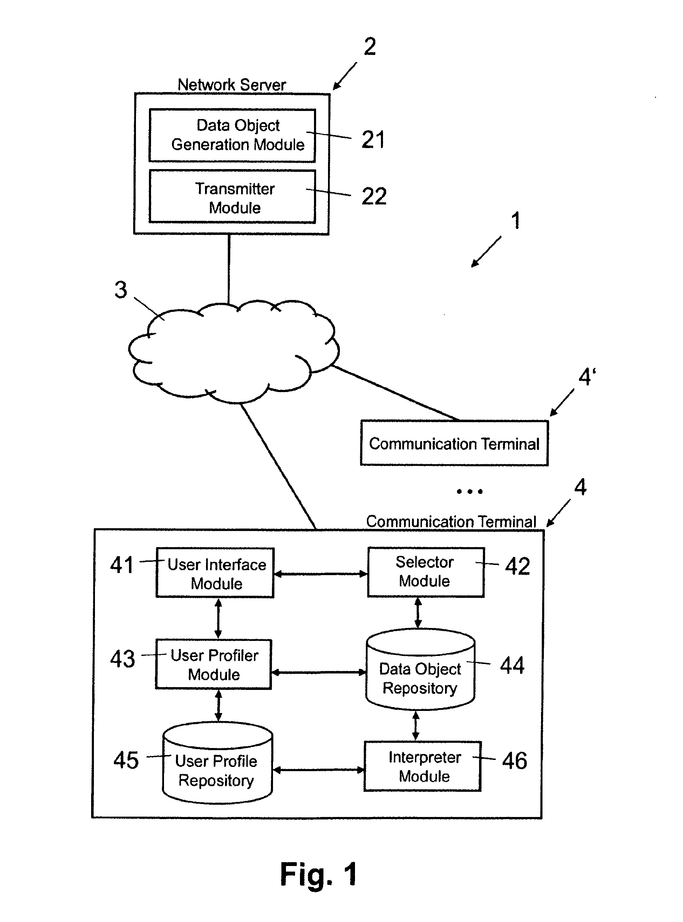

In Figure 1, reference numeral 1 refers to a system for transmitting user data from a network server 2 to communication terminals 4 for selective rendering of the user data by the communication terminals 4. The system comprises a network server 2 and a plurality of communication terminals 4, 4' which are connected to the network server 2 via, e.g. direct communication links or a telecommunication network 3.

The network server 2 includes one or more operational computers with one or more processors. Furthermore, the network server 2 includes various functional modules, including a data object generation module 21 and a transmitter module 22. The transmitter module 22 is configured to transmit data objects generated by the data object generation module 21 via a direct communication link or the telecommunication network 3 to one or more communication terminals 4, 4'.

The telecommunication network 3 comprises a fixed communication network and/or a mobile radio communication network. Preferably, the telecommunication network 3 comprises the Internet.

The communication terminal 4, 4' includes one or more processors. The communication terminal 4, 4' is, for example, a fixed or mobile personal computer, a smart phone, a cellular phone, or a personal digital assistant (PDA) for data communication. For example, the communication terminal 4, 4' is a mobile phone or a mobile computer connected to a WLAN (Wireless Local Area Network), or equipped with other communication modules for mobile communication, compliant to standards such as GSM (Global System for Mobile Communication) or UMTS (Universal Mobile Telecommunication System).

Moreover, the communication terminal 4, 4' includes various functional modules, including a user interface module 41, a selector module 42, a user profiler module 43, and an interpreter module 46. The communication terminal 4, 4' further includes a user profile repository 45 such as a memory subsystem, a data base system or another system for efficient storage of user profile data. The data object repository 44 includes a memory subsystem, a data base system or another system for efficient storage of e.g. received data objects as well as computed affinity and certitude values assigned in each case to a data object. For privacy and data confidentiality reasons the user profile repository 45 and the data object repository 44 are not accessible for reading from outside of the communication terminal 4, 4'.

The communication terminal 4, 4' further includes a user interface which is controlled by the user interface module 41. The user interface comprises conventional devices for input and output of data. For example, the devices for input of data include a keyboard, keypad, mouse, joystick or touch screen monitor and devices for output of data include a monitor, loudspeaker or - for the case of a fixed personal computer - a printer.

Preferably, the functional modules are implemented as programmed software modules comprising computer program code for directing a processor of a computer or communication terminal 4, 4', respectively, to perform functions as described later in more detail. The computer program code is stored on a tangible computer-readable medium which is connected fixed or removably to the respective processor(s). One skilled in art will understand, however, that in alternative embodiments the functional modules may be implemented fully or at least partly by way of hardware components.

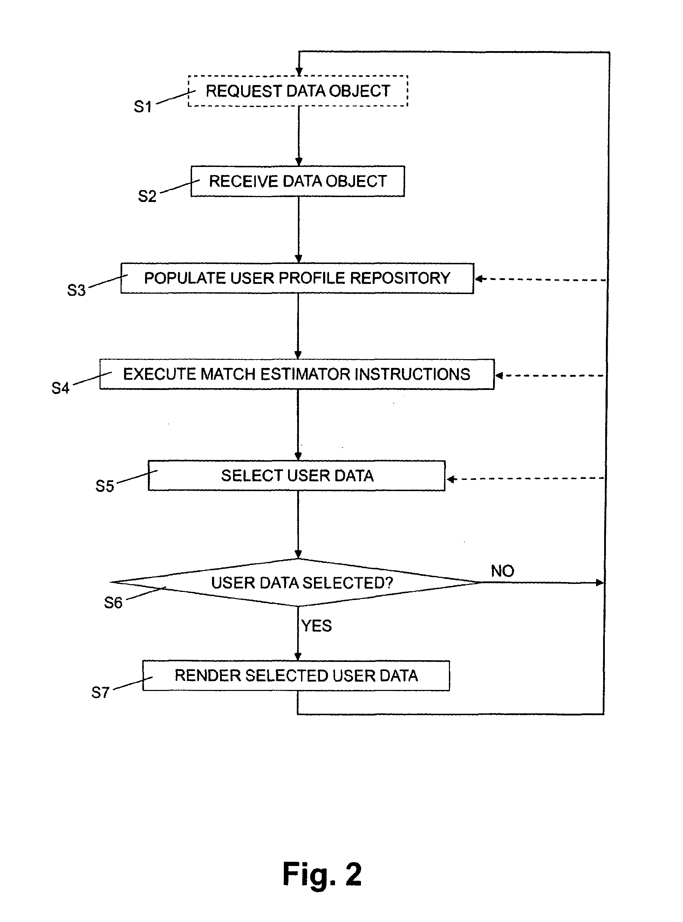

In the following paragraphs, described with reference to Figures 2 to 4 are possible sequences of steps performed by the functional modules for distributing user data from the network server 2 to the communication terminals 4, 4' for selective rendering of user data by the communication terminals 4, 4'.

In Figure 2 to 4, all steps are performed by the functional modules of the communication terminal 4, 4'.

In optional step S1 in Figure 2, the communication terminal 4, 4' sends a request to the network server 2 for requesting the network server 2 to transmit one or more data objects to the communication terminal 4, 4' (pull mode). In another embodiment, the network server 2 proactively transmits data objects to the communication terminal 4, 4' (push mode).

The data object includes for example a mobile agent comprising data and software (executable and/or interpretable code). The data object is forwarded through the telecommunication network 3 or a direct connection to the communication terminal 4, 4'. However, to avoid security risks and protect the privacy of the user, once the data and software contained in the data object is extracted at a communication terminal 4, 4' (see step S23) and the software is executed/interpreted, the data object is not transmitted again by the communication terminal 4, 4' (for example to another communication terminal 4, 4').

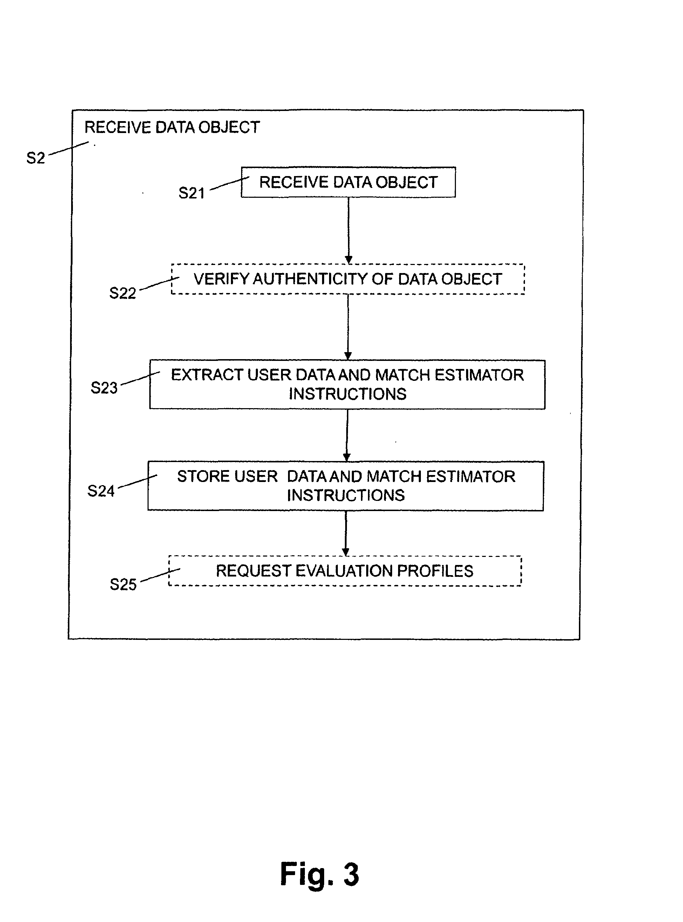

In step S2, a data object transmitted from the network server 2 is received by the communication terminal 4, 4'. In Figure 3, the receiving of a data object by the communication terminal 4, 4' is explained in more detail, by subdividing step S2 into steps S21 to S25.

Table 1 illustrates an exemplary structure of a data object including user data, match estimator instructions, an expiration date, a digital signature, and an optional evaluation profile.

**Table 1**

| Data Object | | | | |
|---|---|---|---|---|
| User Data | Match Estimator Instructions | Expiration Date | Digital Signature | Evaluation Profile |

The user data comprises data and information sent from the central server 2 to the communication terminals 4, 4'. The user data can be seen as payload of the data object the content of which is not necessarily associated with the user of the communication terminal 4, 4'. The user data includes data files and/or executable files for various purposes such as information, entertainment or advertisement. Examples for user data include digital multi-media files (audio, image and video files), e-mail, rich text files, Portable Document Format (PDF) files and Hypertext Markup Language (HTML) documents. Moreover, the user data includes software applications for example games. Further examples for user data include references to external documents for example hyper text links to web pages. External documents are provided e.g. by the network server 2, the telecommunication network 3 and/or the Internet.

Preferably, the user data does not contain references or links to external documents or services, i.e. the user data is completely embedded in the data object. For instance, small data items (e.g. images) are included as embedded data in HTML documents, according to the definition of the Uniform Resource Locator (URL) scheme "data" in RFC 2397 of the Internet Society (ISOC). Hence, the privacy of the user is protected since it is not possible to track which user data is selected and rendered by the user of the communication terminal 4, 4'. Since no external web content is downloaded by the communication terminal 4, 4', the security is increased since no malicious scripts, web viruses or the like can be downloaded from the Internet. Furthermore, additional internet traffic and costs are avoided since no further internet connections are required.

The match estimator instructions include executable and/or interpretable files which cause the interpreter module 46 of the communication terminal 4, 4' to perform tasks according to the encoded instructions. In a preferred embodiment, the match estimator instructions include a scripting language source file (such as a JavaScript source file) to control one or more software applications at the communication terminal 4, 4'. Alternatively, match estimator instructions include a file containing instructions (such as bytecode) for a software interpreter. In a variant, match estimator instructions also include machine code instructions executable by one of the physical processors of the communication terminal 4, 4'.

Preferably, match estimator instructions are written in the JavaScript scripting language. Since many mobile platforms are offering Application Programming Interfaces (API) to run JavaScript source files in a sandboxed environment, this embodiment constitutes a secure, fast and effortless solution. Furthermore, when using JavaScript based match estimator instructions and HTML encoded user data, the same instance of a WebKit engine can be used for (a) executing the match estimator instructions and (b) rendering the user data on a screen of the communication terminal 4, 4'. In this way, memory requirements of applications running at the communication terminal 4, 4' are reduced.

The expiration date comprises an absolute or relative time value after which the data object or parts of the data object are removed from the communication terminal 4, 4'. The digital signature certifies that the data object and its content are genuine and stem from a trustable source.

In general, the evaluation profile includes (a) specifications which user profile elements are retrieved from the user of the communication terminal 4, 4' and stored in the user profile repository 45 and (b) how the respective user profile data is retrieved from the user. Hence, the evaluation profiles sent from the network server 2 explicitly or implicitly define the structure and the content of the user profile data stored in the user profile repository 45 at the communication terminal 4, 4'.

Table 2 illustrates an exemplary structure of the evaluation profile, including entries with a name element, a question element and an answer element.. The illustrated evaluation profile defines how the user profiler module 43 collects user profile data by interacting with the user interface module 41 and the user profile repository 45.

**Table 2**

| Evaluation Profile | | |
|---|---|---|
| Name | Question | Answer |
| ... | ... | ... |
| Name | Question | Answer |

The name element indicates the content of the respective entry. Examples for names include e.g. "Age", "Gender", "Religion", "Food pattern", "Nationality", "Language", "Residence Location" or "Current Location". For a question element in the evaluation profile, there are entries with a plurality of possible answer elements. As will be explained later in more detail, the user profiler module 43 creates data records at the user profile repository 45. The data records comprise user profile elements according to the evaluation profile. As illustrated in Table 3, the user profile element comprises a name element (which is identical to the name element of the evaluation profile) and a value element.

**Table 3**

| User Profile Element | |
|---|---|
| Name | Value |
| ... | ... |
| Name | Value |

The user profiler module 43 asks the user via the user interface module 41 the question and the user chooses one or more of the possible answers. For example, the entry of the evaluation profile with the name element "Gender" is associated with the question element "What is your gender?" and with two possible answer elements "Male" and "Female". The question "How old are you?", for example, has the following answer elements: "<18", "18-30", or ">30". The answer chosen by the user is stored by the user profiler module 43 as value element of a user profile element with the respective name. As will be explained later in more detail, the match estimator instructions will compute the affinity value and the certitude value of a received data object from the value elements stored at the user profile repository 45.

Optionally, the evaluation profile includes instructions for instructing the user profiler module 43 of the communication terminal 4, 4' to retrieve user profile data without directly querying the user via the user interface module 41. Instead, the user profile profiler is instructed to log user statistics during operation of the communication terminal 4, 4'. Such user statistics include logging visited web sites, software applications used, web searches performed and/or email usage. Furthermore, the user profiler module 43 logs which user data received from the network server 2 has been selected and rendered by the communication terminal 4, 4'. In addition, the user profile module 43 receives data from e.g. a Global Positioning System (GPS) about the current location of the communication terminal 4, 4'. The location is stored in the user profile repository 45 to collect statistics about e.g. preferred locations of the user.

In Figure 3, the data object is received in step S21. In optional step S22, using the digital signature, the communication terminal 4, 4' verifies that the data object is genuine and received from a certified source.

In step S23, the interpreter module 46 extracts the user data, the match estimator instructions, the expiration date, the digital signature, and the evaluation profile from the received data object.

Subsequently, in step S24, the extracted user data, match estimator instructions, expiration date, digital signature and evaluation profile are stored in the data object repository 44. Specifically, the user data, match estimator instructions, expiration date, digital signature and evaluation profile are stored in a suitable data structure (e.g. a record or an array) such that the user data, match estimator instructions, expiration date, digital signature and evaluation profile are assigned to each other.

Optionally, in optional step S25, no or only some evaluation profiles are contained in the data object and received by the communication terminal 4, 4'. The interpreter module 46 determines the required user profile data e.g. by analyzing the match estimator instructions. The interpreter module 46 further requests additional evaluation profiles from the network server 2. When the network server 2 transmits the requested evaluation profiles to the communication terminal 4, 4', an additional digital signature is transmitted with the requested evaluation profiles in order to guarantee their authenticity.

Alternatively, the evaluation profile is encoded in the match estimator instructions and the interpreter module 46 determines the evaluation profile by decoding the evaluation profile in the match estimator instructions.

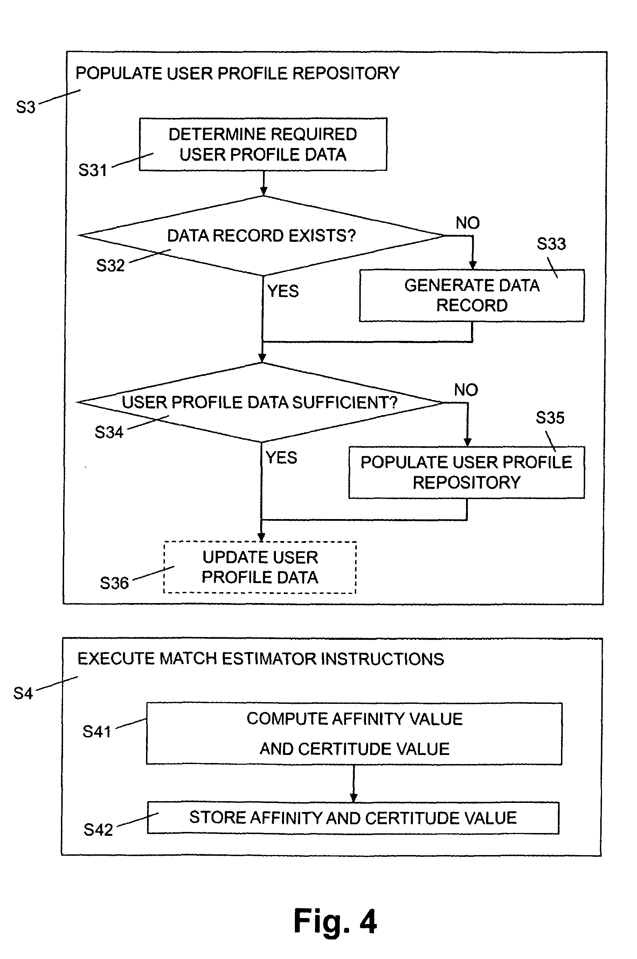

In step S3 of Figure 2, the user profiler module 43 is populating the user profile repository 45 according to the evaluation profile stored in the data object repository 44. Figure 4 displays a more detailed sequence of steps S31 to S36 for populating the user profile repository 45.

In step S31, the user profiler module 43 analyzes the user profile data stored at the user profile repository 45 and the evaluation profile stored at the data object repository 44. Based on this analysis, the user profiler module 43 decides for each data object which user profile data is required as input to execute the match estimator instructions.

In step S32, the user profiler module 43 checks for each data object stored at the data object repository 44 whether a corresponding data record at the user profile repository 45 exists. The data record comprises e.g. user profile elements according to the evaluation profile. If no corresponding data record exists, in step S33, the user profiler module 43 generates a new data record according to the evaluation profile and corresponding to the data object in the user profile repository 45.

In step S34, the user profiler module 43 checks for each data object stored at the data object repository 44 whether the user profile data in the user profile repository is sufficient for the computation of the match estimator instructions.

For example, the decision whether the user profile data is sufficient depends on the certitude value which is computed from the user profile data by executing the match estimator instructions. As will be explained later in more detail (see step S4), the certitude value is stored in the data object repository 44 and associated with the data object. If the certitude value is e.g. higher than a certain minimum certitude value, the user profile data is regarded as sufficient.

If the user profile data is not sufficient, step S35 is executed. In step S35, the user profiler module 43 is populating the user profile repository 45. As already mentioned the user profiler module 43 asks the user via the user interface module 41 questions and provides possible answers according to the evaluation profile. The selected answers are stored as values of a user profile element in the user profile repository 45.

If the user profile data is sufficient in optional step S36, the user profiler module 43 updates the user profile data in the user profile repository 45. Updating the user profile data includes asking the user of the communication terminal the same questions again and/or collecting new user statistics. In this way, the user profiler module 43 accounts for changing habits or preferences of the user.

Since there may be several applications running at the communication terminal 4, 4' and the user of the communication terminal 4, 4' may be interactively working with the user interface module 41, the user profiler module 43 chooses a suitable point in time to query the user using a question according to the evaluation profile.

Optionally, the user profiler module 43 also decides in which order questions are asked to the user of the communication terminal 4, 4'. For this purpose, the user profiler module 43 estimates e.g. the importance of user profile data by identifying user profile data which is required by a plurality of data objects to run the match estimator instructions. The user profiler module 43 further accelerates the retrieval of missing user profile data according the estimated importance.

In step S4, the interpreter module 46 executes or interprets the match estimator instructions. Pseudocode A shows an exemplary pseudocode of the function evaluate() which is executed in step S41 for computing the affinity and certitude values of a data object. The computed affinity and certitude values are integer numbers between 0 and 6, for example. In general, the affinity value and the certitude value comprise Boolean, integer and real numbers.

| | |
|---|---|
| 1 | function evaluate(){ |
| 2 | //Default affinity and certitude values |
| 3 | affinity = 0; |
| 4 | certitude = 3; |
| 5 | //Check the age of the user |
| 6 | if (repository['Age'] != undefined){ |
| 7 | //User data is targeted at young adults |
| 8 | if (repository['Age'] = '<18'){ |
| 9 | affinity += 0; |
| 10 | certitude += 2;} |
| 11 | if (repository['Age'] = '18-30'){ |
| 12 | affinity += 4; |
| 13 | certitude += 2;} |
| 14 | if (repository['Age'] = '>30'){ |
| 15 | affinity += 3; |
| 16 | certitude += 2;} |
| 17 | }else{certitude -= 2;} |
| 18 | //Check the gender of the user |
| 19 | if (repository['Gender'] != undefined){ |
| 20 | //User data is targeted at males |
| 21 | if (repository['Gender'] = 'Male){ |
| 22 | affinity += 2; |
| 23 | certitude += 1; |
| 24 | }else{ |
| 25 | affinity += 1; |
| 26 | certitude += 1; |
| 27 | }else{ |
| 28 | certitude -= 1;} |
| 29 | return affinity; |
| 30 | return certitude;} |

Pseudocode A

In the exemplary Pseudocode A, a high affinity value indicates that the user data contained in the data object may be of high interest to the user. As will be explained later in more detail, the maximum possible affinity value for this data object is 6. The certitude value indicates to what extent the required user profile data in the user profile repository 45 is complete and, hence, the reliability of the respective affinity value. A high certitude value indicates that the computed affinity value exhibits a high reliability. The maximum possible certitude value for this data object is also 6.

In lines 3 and 4 of Pseudocode A, the affinity value and the certitude value are initialized and assigned the default values 0 and 3, respectively.

In line 6, the interpreter module 46 examines whether the user profile element with the name "Age" exists in the user profile repository 45 and whether the value element has been determined by the user profiler module 43. In other words, the interpreter module 46 examines whether the user profiler module 43 has successfully queried the age of the user. If the user profile element with the name "Age" exists, the affinity and certitude values are incremented dependent on the age of the user. In lines 8, 11, and 14, the interpreter module 46 tests whether the user's age is below 18, between 18 and 30, or over 30 and increments the affinity value and the certitude value dependent on the user's age. If the value element of the user profile element with the name "Age" is not available, the certitude value is decremented by 2 in line 17.

Accordingly, in line 19, the interpreter module 46 examines whether the user profiler module 43 has successfully queried the gender of the user, and increments the affinity value and the certitude value dependent on the user's gender in lines 22, 23, 25, and 26. If user profiler module 43 did not manage to query the gender of the user and store the respective user profile element, the certitude value is decremented by 1 in line 28. In line 29 and 30, the computed affinity and certitude values are returned.

If the user is male and between 18 and 30 years old, the affinity value reaches its maximum value 6. If, for example, the user profile data specifies that the user is a female and older than 30 years, the computed affinity value is 4.

For example, the user data comprises digital advertisement for a product, the user of the communication terminal 4, 4' is a potential customer and a high affinity value indicates that the user is in the marketing target of the product.

In the exemplary Pseudocode A, the age of the user is of greater importance for deciding whether to render the user data than the gender of the user. Hence, the certitude value is incremented/decremented by 2 if the age of the user is known/unknown and only incremented/decremented by 1 if the gender of the user is known/unknown, respectively.

Match estimator instructions as the ones in Pseudocode1 facilitate a great flexibility in computing affinity and certitude values from the user profile data available at the user profile repository 45. Using an interpretable/executable code, numerous strategies become possible how user data is distributed for selective rendering at the communication terminals 4, 4'. In more sophisticated implementations, various weighting factors, conditions and mathematical formulas are used to compute the affinity values and certitude values.

For example, user data containing an invitation to a social event is targeted to persons older than 30 years. However, females are also allowed to join the social event if the are younger, e.g., older than 18. Suitable match estimator instructions can easily be designed. Pseudocode B shows a corresponding evaluate()-function.

| | |
|---|---|
| 1 | function evaluate(){ |
| 2 | //Default affinity and certitude values |
| 3 | affinity = 0; |
| 4 | certitude = 3; |
| 5 | //Check the age and the gender of the user |
| 6 | if ( repository['Age') = '>30' OR |
| 7 | (repository['Gender'] = 'Female' AND repository['Age'] = '18-30')){ |
| 8 | affinity += 6; |
| 9 | certitude += 3;} |
| 10 | return affinity; |
| 11 | return certitude;} |

Pseudocode B

In step S42, the interpreter module 46 stores the computed affinity and certitude value in the data object repository 44 such that the affinity value and the certitude value are assigned to the respective data object.

In step S5, the selector module 42 selects which and how user data stored at the data object repository 44 is rendered based on the affinity and certitude values associated with the user data. A user data selection algorithm is performed in order to compute whether and how user data is rendered.

For example, an initial screening is performed to identify the user data with a certitude value higher than a minimum certitude value. The minimum certitude value is e.g. a fixed threshold value which depends on the maximum possible certitude value. Alternatively, the minimum certitude value is received within the data object from the network server 2 or is specified by the user of the communication terminal 4, 4' via the user interface module 41. In the following, only user data with a certitude value higher than the minimum certitude value is considered.

In a next step, the selector module 42 decides dependent on the affinity value, the type of the user data and other applications running on the communication terminal 4, 4', whether and how the user data is rendered. For example, a minimum affinity value is used as threshold value to decide whether user data is rendered. Again, the minimum affinity value depends on the maximum achievable affinity value. If the affinity value is high enough, the respective user data is rendered for a certain amount of time according the affinity value. For example, an image file containing digital advertisement with a high affinity value is rendered for a longer period of time than image files with low affinity values.

In another embodiment, the selector module 42 further schedules when the user data is rendered based on the information available to the selector module 42. For example, certain user data is rendered at a particular time of the day.

In step S6, the communication terminal 4, 4' checks whether user data has been selected for rendering.

If user data has been selected for rendering by the selector module 42, the respective user data is rendered in step S7 by the user interface module 43. One or more of the devices for input and output of data are used for rendering of the user data. For example, information contained in the user data pops up in a pop up window on a screen. The size, position and duration of rendering of the popup window are determined by the selector module 42 and depend on, e.g., the affinity value associated with the user data. Alternatively, a digital advertisement is rendered in a small banner on the screen.

As already mentioned, the selector module 42 decides dependent on e.g. media type and affinity value of the user data how the user data is rendered. For example, text information and images are printed on a printer connected to the communication terminal 4, 4'.

Optionally, the process of rendering user data also involves interaction with the user of the communication terminal 4, 4'. For this purpose, devices for input of data are used. For example, the process of rendering user data involves displaying a list of user data ready for rendering on the screen. The user selects specific user data to activate the rendering of the specific user data on the screen.

After the user data is rendered in step S7 or if no user data is selected by the selector module 42 in step S5, the communication terminal 4, 4' proceeds to request new data objects from the network server 2 in step S1. In further embodiments of the present invention, as indicated by the dashed arrows in Figure 2, a computer program running at the communication terminal 4, 4' alternatively loops back to steps S3, S4 or S5.

In Figure 2, steps S1 to S7 are executed as a sequential program. In yet another embodiment of the present invention, the computer program is implemented in form of independent processes with appropriate inter-process communication using the data object repository 44 and the user profile repository 45 as shared memories. For example, a first process is responsible for receiving data objects from the network server 2 and storing the data objects in the data object repository 44 (steps S1 and S2). While a second process is populating the user profile repository 45 by querying the user via the user interface module 41 (step S3), a third process is executing match estimator instructions based on the user profile data stored in the user profile repository 45 and storing the computed affinity values in the data object repository 44 (step S4). Finally, a forth process is selecting, based on the affinity values and certitude values in the data object repository 44 which user data is rendered by the user interface module 41 (steps S5, S6, S7).

The above mentioned four processes are repeatedly executed. Specifically, the second process monitors the user profile repository 45 for missing user profile data and updates the user profile repository 45. The third process is repeatedly executing/interpreting the match estimator instructions to re-evaluate the user profile data as soon as new user profile data becomes available. The forth process is continuously monitoring the data object repository 44 for computed/updated affinity values and computed/updated certitude values, and repeatedly re-selects user data for rendering by re-evaluating the computed/updated affinity and certitude values.

As already mentioned, the network server 2 is configured to compose and transmit the data objects. The network server 2 is further configured to stream a plurality of data objects to the communication terminals 4, 4', and to transmit the evaluation profiles to the communication terminals 4, 4' upon request. The network server 2 further provides interfaces and services for system administrators. For this purpose, the network server 2 is configured to receive and modify data objects or elements of data objects. Specifically, the network server 2 is configured to receive evaluation profiles for defining the structure and content of the user profile data at the communication terminals 4, 4'.

For example, web services provided by the network server 2 are implemented based on the Representational State Transfer (REST) software architecture. In an alternative embodiment, the web services are implemented based on the Simple Object Access Protocol (SOAP) protocol.

It should be noted that, in the description, the computer program code has been associated with specific function modules and the sequence of the steps has been presented in a specific order, one skilled in the art will understand, however, that the computer program code may be structured differently and that the order of at least some of the steps could be altered, without deviating from the scope of the invention.

## Claims

1. A communication terminal (4, 4') comprising user profile data and being configured to receive via a telecommunication network (3) from a network server (2) a data object comprising user data, wherein the communication terminal (4, 4') further comprises:
an interpreter module (46) configured to extract match estimator instructions included in the data object, and to compute according to the match estimator instructions an affinity value based on the user profile data; and
a selector module (42) configured to select, depending on the affinity value computed by the interpreter module (46), the user data to be rendered by the communication terminal (4, 4').

2. The communication terminal (4, 4') of claim 1, wherein the interpreter module (46) is further configured to execute the match estimator instructions for computing the affinity value by combining and weighting values of the user profile data.

3. The communication terminal (4, 4') of claim 1 or 2, wherein the interpreter module (46) is further configured to determine from the data object user profile data required for computing the affinity value.

4. The communication terminal (4, 4') of one of claims 1 to 3, further comprising a user profiler module (43) configured to request the user of the communication terminal (4, 4') via a user interface to enter the user profile data required by the match estimator instructions for computing the affinity value.

5. The communication terminal (4, 4') of one of claims 1 to 4, further comprising a data object repository (44) for storing data objects received from the network server (2); wherein the interpreter module (46) is further configured to store the affinity value in the data object repository (44) assigned to the respective data object; and the selector module (42) is further configured to continuously monitor the data object repository (44), and to select, depending on the affinity values assigned to the data objects, the user data to be rendered by the communication terminal (4, 4').

6. The communication terminal (4, 4') of one of claims 1 or 5, wherein the interpreter module (46) is further configured to execute the match estimator instructions for computing a certitude value which indicates reliability of the computed affinity value, and the selector module (42) is further configured to select, depending on the affinity value and the certitude value, the user data to be rendered by the communication terminal (4, 4').

7. A network server (2) comprising:
a data object generation module (21) configured to generate data objects comprising user data and match estimator instructions, wherein the match estimator instructions are configured to instruct an interpreter module (46) of a communication terminal (4, 4') to compute affinity values based on user profile data locally stored at the communication terminal (4, 4'), and
a transmitter module (22) configured to transmit the data objects via a telecommunication network (3) to the communication terminals (4, 4') for enabling the communication terminals (4, 4') to select, depending on the computed affinity value, user data to be rendered.

8. A computer program product comprising computer program code configured to direct one or more processors of a communication terminal (4, 4'), such that the communication terminal (4, 4')
receives via a telecommunication network (3) from a network server (2) a data object comprising user data and match estimator instructions;
extracts the user data and the match estimator instructions from the data object; computes an affinity value according to the match estimator instructions based on user profile data stored at the communication terminal (4, 4');
selects, depending on the computed affinity value, the user data to be rendered; and renders the selected user data.

9. A method of distributing user data from a network server (2) to a plurality of communication terminals (4, 4') for rendering the user data at the communication terminals (4, 4'), the method comprising in each case at the communication terminals (4, 4'):
receiving (S21) at the communication terminal (4, 4') via a telecommunication network (3) a data object comprising the user data and match estimator instructions from the network server (2);
extracting (S23) the user data and the match estimator instructions from the data object at the communication terminals (4, 4');
computing (S41) an affinity value according to the match estimator instructions based on user profile data stored at the communication terminal (4, 4'); and
selecting (S5) by the communication terminal (4, 4'), depending on the computed af finity value, the user data to be rendered.

10. The method of claim 9, further comprising the communication terminal (4, 4') executing the match estimator instructions for computing (S41) the affinity value by combining and weighting values of the user profile data.

11. The method of claim 9 or 10, further comprising the communication terminal (4, 4') determining (S31) from the data object user profile data required for computing the affinity value.

12. The method of one of claims 9 to 11, further comprising the communication terminal (4, 4') requesting (S35) the user of the communication terminal (4, 4') via a user interface to enter the user profile data required by the match estimator instructions for computing the affinity value.

13. The method of one of claims 9 to 12, further comprising storing (S24) data objects received from the network server (2) in a data object repository (44) at the communication terminal (4, 4'), storing (S43) the affinity value assigned to the respective data object in the data object repository (44), continuously monitoring (S4) the data object repository (44), and selecting (S5), depending on the affinity values assigned to the data objects, the user data to be rendered by the communication terminal (4, 4').

14. The method of one of claims 9 to 13, further comprising the communication terminal (4, 4') executing (S41) the match estimator instructions for computing a certitude value which indicates reliability of the computed affinity value, and selecting, depending on the affinity value and the certitude value, the user data to be rendered by the communication terminal (4, 4').
